# EUROPÄISCHE PATENTSCHRIFT

(11) **EP 3 323 962 B1**
(45) Veröffentlichungstag und Bekanntmachung des Hinweises auf die Patenterteilung: **19.01.2022**
(21) Anmeldenummer: 17200810.4
(22) Anmeldetag: 09.11.2017
(51) Int. Cl.: E04G 17/065, E04G 17/075

(54) **VORRICHTUNG ZUR LÖSBAREN ABSTÜTZUNG EINES SCHALUNGSANKERS AN EINEM SCHALUNGSELEMENT EINER BETONWANDSCHALUNG**
DEVICE FOR REVERSIBLY SETTING A FORMWORK ANCHOR IN A FORMWORK ELEMENT OF A CONCRETE WALL FORMWORK
DISPOSITIF D'APPUI DE MANIÈRE AMOVIBLE D'UN ANCRE DE COFFRAGE SUR UN ÉLÉMENT DE COFFRAGE D'UN COFFRAGE À PAROI EN BÉTON

(30) Priorität: 16.11.2016 AT 510412016
(43) Veröffentlichungstag der Anmeldung: 23.05.2018
(73) Patentinhaber: Ringer GmbH, 4844 Regau (AT)
(72) Erfinder: Pohn, Hermann, 4842 Zell am Pettenfirst (AT)
(74) Vertreter: Hübscher & Partner Patentanwälte GmbH

(56) Entgegenhaltungen:
- EP-A1- 2 816 175
- DE-U1- 20 012 548
- DE-U1- 20 012 548
- US-A- 1 809 962

## Beschreibung

Die Erfindung bezieht sich auf eine Vorrichtung zur lösbaren Abstützung eines Schalungsankers an einem Schalungselement einer Betonwandschalung mit einer an einem schalungsfesten Stützanschlag axial abstützbaren Ankeraufnahme für ein Ankerende und mit einem in der Ankeraufnahme axial abgestützten, in Rastausnehmungen des Ankerendes eingreifbaren und aus den Rastausnehmungen gegen eine Federkraft lösbaren Rastkörper für das innerhalb der Ankeraufnahme verschiebbar führbare Ankerende.

Die einander gegenüberliegenden Schalungselemente einer Betonwandschalung werden durch Schalungsanker in einem der Wanddicke entsprechenden Abstand gehalten, wobei die Schalungsanker die Schalungselemente mit ihren Ankerenden durchsetzen und auf der Außenseite der Schalungselemente in Muttergewinde von Ankeraufnahmen eingreifen, an denen sich die Schalungselemente unter einer Zugbelastung der Schalungsanker abstützen. Damit die Schalungselemente nicht auf beiden Wandseiten von außen zugänglich sein müssen, werden die Ankeraufnahmen im Bereich der Schalungselemente auf der unzugänglichen Wandseite in schalungsfesten Einsatztöpfen angeordnet, deren der Innenseite der Schalungselemente zugekehrte Topfböden vom Ankerende durchsetzt sind, sodass das mit einem Gewindeabschnitt versehene Ankerende von der Innenseite der Schalungselemente her durch den Topfboden bis auf Anschlag ins Muttergewinde der Ankeraufnahme eingeschraubt werden kann, die mithilfe einer Halterung drehfest gegenüber dem Einsatztopf gehalten wird. Das andere Ankerende durchsetzt das gegenüberliegende Schalungselement und muss an diesem axial abgestützt werden. Zur Anpassung an unterschiedliche Wanddicken wird das aus dem Schalungselement nach außen vorstehende Ankerende gegenüber einer am Schalungselement abgestützten Ankeraufnahme axial verstellbar angeordnet. Zu diesem Zweck ist es bekannt (DE 10 2006 023 062 A1, DE 10 2010 003 017 A1), die an einem schalungsfesten Stützanschlag abgestützte, vom Ankerende durchsetzte Ankeraufnahme mit einem Rastkörper zu versehen, der aus einer axial gegenüber der Ankeraufnahme abgestützten, geteilten Gewindemutter gebildet wird, die mit einem Gewindeabschnitt des Ankerendes zusammenwirkt und sich in der geschlossenen Raststellung im Eingriff mit dem Gewindeabschnitt befindet, aus dieser Raststellung aber geöffnet werden kann, indem die zwei Gewindemutterteile gegen Federkraft radial auseinanderbewegt werden und den Gewindeabschnitt des Ankerendes freigeben, das somit gegenüber der Gewindemutter axial verlagert werden kann. Nachteilig ist allerdings der durch die geteilte Gewindemutter bedingte Konstruktionsaufwand und die Notwendigkeit, eine zusätzliche Drehsicherung für das Ankerende vorsehen zu müssen, wenn eine Schraubverstellung des Schalungsankers gegenüber der Gewindemutter ausgeschlossen werden soll.

Der Erfindung liegt somit die Aufgabe zugrunde, eine Vorrichtung zur lösbaren Abstützung eines Schalungsankers an einem Schalungselement einer Betonwandschalung so auszugestalten, dass mit einem vergleichsweise geringen Konstruktionsaufwand eine sichere Halterung des Ankerendes in verschiedenen Raststellungen sichergestellt wird, und zwar unter der Voraussetzung einer einfachen Handhabung.

Die Erfindung löst die gestellte Aufgabe durch die Merkmale des Anspruchs 1.

Da in der Losstellung des Rastrings dessen Rastrippen in einer Projektion in Richtung der Ankerachse einen Durchtritt für das Ankerende freigeben, kann das Ankerende gegenüber dem Rastring in der Losstellung axial verlagert werden. In der Raststellung wird jedoch der einseitig an der Ankeraufnahme abgestützte Rastring gegen das Ankerende eingeschwenkt, sodass die Rastrippen in die Rastausnehmungen des Ankerendes eingreifen und in dieser Eingriffsstellung durch eine Federkraft gehalten werden. Wegen der Ausbildung der Rastausnehmungen in Ringform hat eine Drehung des Schalungsankers keinen Einfluss auf die axiale Halterung des Ankerendes in der Ankeraufnahme. Die einseitige, schwenkbare Abstützung des Rastrings an der Ankeraufnahme sichert einfache Konstruktions- und Handhabungsbedingungen, weil der Rastring lediglich gegen eine Federkraft aus der Raststellung in eine Losstellung ausgeschwenkt werden muss, was mittels eines Handhebels mit einem geringen Kraftaufwand durchgeführt werden kann.

Wegen der einseitigen Schwenkabstützung des Rastrings ergeben sich vorteilhafte Voraussetzungen für eine Rastringbeaufschlagung durch eine Rastfeder, weil der Rastring zu diesem Zweck lediglich auf der seiner Abstützseite gegenüberliegenden Umfangsseite mit einer Rastfeder zur Bereitstellung der Federkraft beaufschlagt zu werden braucht.

Damit ein dichter Durchtritt des Ankerendes durch das Schalungselement erreicht werden kann und Fluchtungsfehler berücksichtigt werden können, kann die eine Stützhülse bildende Ankeraufnahme unter Zwischenlage eines das Ankerende dicht umschließbaren Dichtungsrings der Vorrichtung am Boden eines den schalungsfesten Stützanschlag bildenden Einsatztopfs abstützbar sein und im Bereich ihres Abstützendes eine Ringnut bilden, in die ein flexibler Haltering einer mit dem Einsatztopf lösbar verbundenen Halterung der Vorrichtung eingreift. Da der Dichtungsring das Ankerende dicht umschließt und zwischen dem Topfboden und dem Abstützende der Ankeraufnahme unter einer Vorspannung gehalten wird, kann in einfacher Weise ein dichter Durchtritt des Ankerendes durch das Schalungselement sichergestellt werden, ohne auf einen einfachen Ausgleich von Fluchtungsfehlern verzichten zu müssen. Die Lagerung der Ankeraufnahme in der mit dem Einsatztopf lösbar verbundenen Halterung mittels eines flexiblen Halterings, der in eine Ringnut des Abstützendes der Ankeraufnahme eingreift, erlaubt ja eine allseitige, begrenzte Verschwenkung der Ankeraufnahme im Einsatztopf um Schwenkachsen, die nahe dem Topfboden verlaufen und daher nur eine geringe Querverlagerung des Ankerendes innerhalb der Durchtrittsöffnung im Topfboden bedingen. Dies bedeutet, dass der Dichtungsring auch bei einer Verschwenkung der Ankeraufnahme einen dichten Durchtritt des Ankerendes durch den Topfboden gewährleisten kann, zumal die bei einem Verschwenken auf einer Seite der Schwenkachse auftretende Verringerung des Abstands zwischen Topfboden und Abstützende der Ankeraufnahme eine mit einer Materialverdrängung einhergehenden Verformung des Dichtungsrings bedingt, die die Anlage des Dichtungsrings am Topfboden einerseits und am Abstützende der Ankeraufnahme anderseits im Bereich des sich vergrößernden Abstands unterstützt. In diesem Zusammenhang ist außerdem zu berücksichtigen, dass mit einer Zugbelastung des Schalungsankers die Vorspannung des Dichtungsrings erhöht und damit die Dichtwirkung verbessert wird. Die Ankeraufnahme stützt sich ja über den Dichtungsring am Topfboden ab.

In der Zeichnung ist der Erfindungsgegenstand beispielsweise dargestellt. Es zeigen
- Fig. 1: eine Betonwandschalung mit einer erfindungsgemäßen Vorrichtung zur Aufnahme eines Schalungsankers ausschnittsweise im Bereich eines Schalungsankers in einem schematischen Axialschnitt,

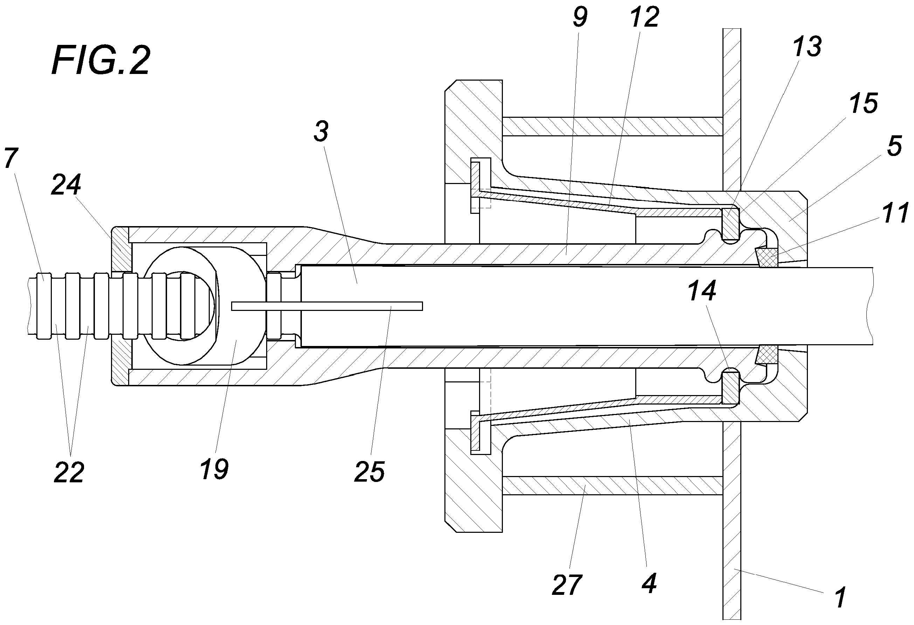

- Fig. 2: eine erfindungsgemäße Vorrichtung in einem gegenüber der Fig. 1 um 90° winkelversetzten Axialschnitt in einem größeren Maßstab und
- Fig. 3: eine erfindungsgemäße Vorrichtung entsprechend der Fig. 1 in einem größeren Maßstab, jedoch mit einem geneigt verlaufenden Schalungsanker.

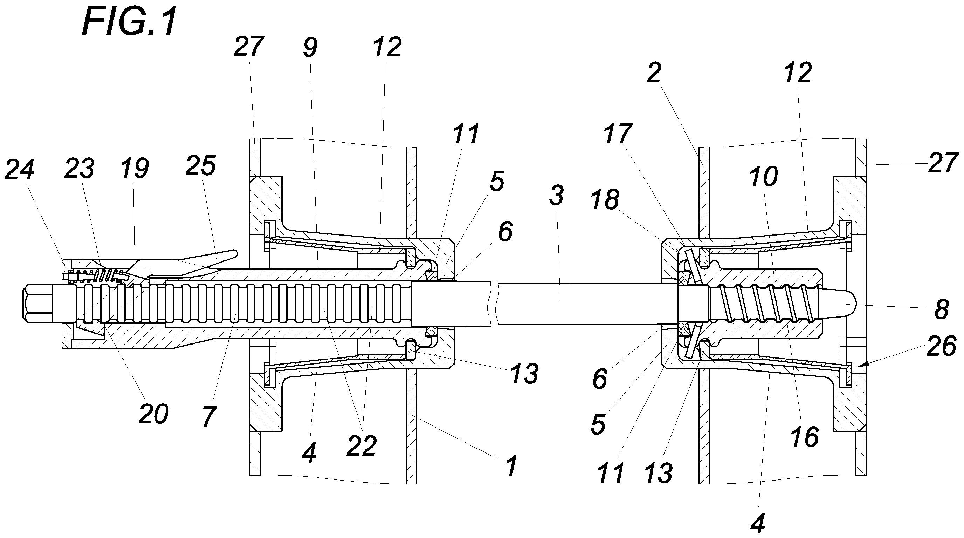

Die Betonwandschalung nach Fig. 1 weist einander mit Abstand gegenüberliegende Schalungselemente 1, 2 auf, die durch Schalungsanker 3 miteinander verbunden sind. Zu diesem Zweck sind die Schalungselemente 1, 2 mit Einsatztöpfen 4 versehen, deren Topfböden 5 Durchtrittsöffnungen 6 für die jeweiligen Ankerenden 7, 8 bilden. Diese Ankerenden 7, 8 sind verschiebefest in Ankeraufnahmen 9, 10 gehalten, die sich unter Zwischenschaltung eines Dichtungsrings 11 am Topfboden 5 als schalungsfester Stützanschlag abstützen und innerhalb des Einsatztopfs 4 mittels einer Halterung 12 festgelegt werden, und zwar durch einen flexiblen Haltering 13, der in eine Ringnut 14 im Bereich des Abstützendes der Ankeraufnahmen 9, 10 eingreift und durch die Halterung 12 in Anlage an einer bodenseitigen Ringschulter 15 des Einsatztopfs 4 gehalten wird.

Die Ankeraufnahmen 9, 10 sind unterschiedlich ausgebildet. Damit das mit einem Gewindeabschnitt versehene Ankerende 8 der Schalungsanker 3 von der Innenseite des Schalungselements 1 her durch die Durchtrittsöffnung 6 im Topfboden 5 hindurch in die Ankeraufnahme 10 bis auf Anschlag eingeschraubt werden kann, ist die Ankeraufnahme 10 mit einem Muttergewinde 16 versehen und gegen eine Drehmitnahme gegenüber dem Einsatztopf 4 abgestützt. Zu diesem Zweck weist die Ankeraufnahme 10 radial vorstehenden Anschlagstiften 17 auf, die mit Bewegungsspiel in radiale Topfausnehmungen 18 eingreifen.

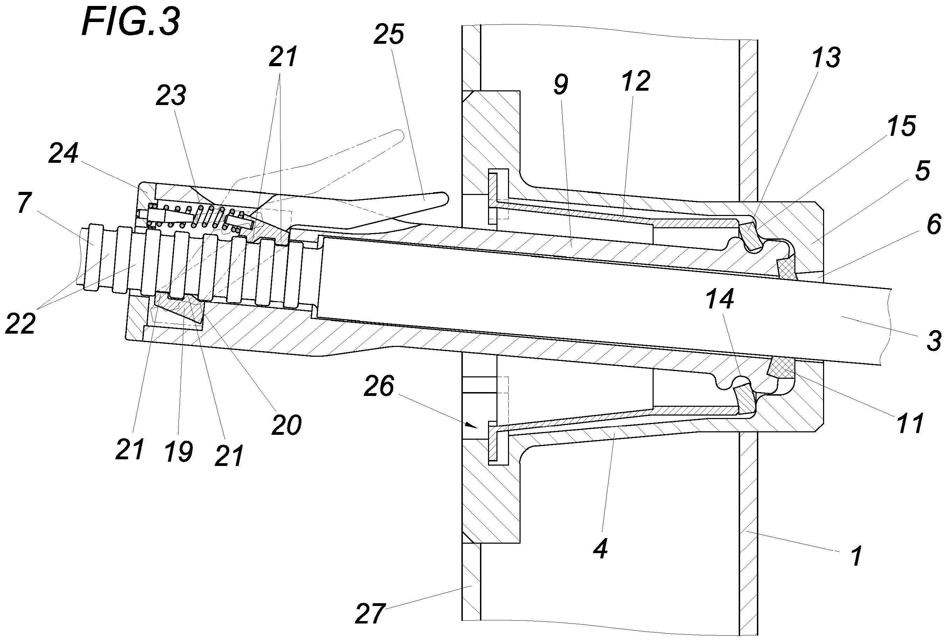

Im Bereich des Schalungselements 1 sind die Schalungsanker 3 zur Einstellung des Abstands zwischen den Schalungselementen 1, 2 und damit zur Vorgabe der jeweiligen Wanddicke in unterschiedlichen Axiallagen mit den Ankeraufnahmen 9 verschiebefest zu verbinden. Zu diesem Zweck ist die eine Stützhülse bildende Ankeraufnahme 9 mit einem das Ankerende 7 umschließenden Rastring 19 versehen, der im Bereich einer Umfangseite an einer Schulter 20 der Ankeraufnahme 9 schwenkbar abgestützt ist und mit Rastrippen 21 in ringförmige Rastausnehmungen 22 des Ankerendes 7 eingreift. Zur Sicherung des jeweiligen Rasteingriffs ist auf der der Schulter 20 gegenüberliegenden Umfangseite eine Rastfeder 23 vorgesehen, die sich an einem vom Ankerende 7 durchsetzten Deckel 24 der Ankeraufnahme 9 abstützt und den Rastring 19 im Rastsinn beaufschlagt, sodass der Rastring 19 aus einer in der Fig. 3 in vollen Linien gezeichneten Raststellung mittels eines am Rastring 19 angesetzten Handhebels 25 gegen die Kraft der Rastfeder nach außen in eine Losstellung verschwenkt werden kann, die in der Fig. 4 strichpunktiert angedeutet ist. In dieser Losstellung sind die Rastrippen 21 des Rastrings 19 außer Eingriff mit den ringförmigen Rastausnehmungen 22 des Ankerendes 7, das somit durch den Rastring 19 freigegeben wird, sodass der Schalungsanker 3 innerhalb der Ankeraufnahme 9 frei verschiebbar geführt wird, solange der Rastring 19 sich nicht in einem Rasteingriff mit dem Ankerende 7 befindet.

Die Halterung 12 für die Ankeraufnahmen 9, 10 können konstruktiv unterschiedlich ausgeführt sein, weil es ja nur darauf ankommt, diese Halterungen 12 gegenüber dem Einsatztopf 4 entsprechend festzulegen. Einfache Konstruktionsverhältnisse ergeben sich in diesem Zusammenhang, wenn die Halterungen 12 mit dem Einsatztopf 4 durch einen Bajonettverschluss 26 lösbar verbunden sind. Der Einsatztopf 4 selbst wird von einem im Querschnitt U-förmigen Versteifungsprofil 27 der Schalungselemente 1, 2 getragen.

Die Abstützung der Ankeraufnahmen 9, 10 am Topfboden 5 der Einsatztöpfe 4 über einen Dichtungsring 11, der sich dicht an das Ankerende 7, 8 anlegt, erlaubt in einfacher Weise einen dichten Durchtritt des Ankerendes 7, 8 durch den Topfboden 5, weil der Dichtungsring 11 den Spalt zwischen dem Topfboden 5 und dem Abstützende der Ankeraufnahmen 9, 10 abdichtet, und zwar nicht nur bei einer koaxialen Anordnung von Einsatztopf 4 und Schalungsanker 3, sondern auch bei Fluchtungsfehlern, bei denen der Schalungsanker 3 gegenüber dem Einsatztopf 4 geneigt verläuft, wie dies der Fig. 3 entnommen werden kann. Bei einer solchen Schwenklage des Schalungsankers 3 muss die Ankeraufnahme 9, 10 diese Schwenklage ebenfalls einnehmen können, was durch den flexiblen Haltering 13 sichergestellt wird. Wegen der axialen Vorspannung des Dichtungsrings 11 bleibt dieser Dichtungsring 11 auch bei einer einseitigen Erweiterung des Spalts zwischen dem Topfboden 5 und dem Abstützende der Ankeraufnahmen 9, 10 in dichter Anlage sowohl am Topfboden 5 als auch am Abstützende der Ankeraufnahmen 9, 10.

## Patentansprüche

1. Vorrichtung zur lösbaren Abstützung eines Schalungsankers (3) an einem Schalungselement (1) einer Betonwandschalung mit einer an einem schalungsfesten Stützanschlag axial abstützbaren Ankeraufnahme (9) für ein Ankerende (7) und mit einem in der Ankeraufnahme (9) axial abgestützten, in Rastausnehmungen (22) des Ankerendes (7) eingreifbaren und aus den Rastausnehmungen (22) gegen eine Federkraft lösbaren Rastkörper für das innerhalb der Ankeraufnahme (9) verschiebbar führbare Ankerende (7), **dadurch gekennzeichnet, dass** der Rastkörper einen auf einer Umfangsseite in der Ankeraufnahme (9) schwenkbar abgestützten, das Ankerende (7) umschließbaren Rastring (19) bildet, der mit Rastrippen (21) versehen ist, die in einer in Richtung des Stützanschlags gegen das Ankerende (7) verschwenkten Raststellung des Rastrings (19) in ringförmige Rastausnehmungen (22) des Ankerendes (7) eingreifen und in einer vom Ankerende (7) weggeschwenkten Losstellung des Rastrings (19) einen Durchtritt für das Ankerende (7) freigeben können.

2. Vorrichtung nach Anspruch 1, **dadurch gekennzeichnet, dass** der Rastring (19) auf der seiner Abstützseite gegenüberliegenden Umfangsseite mit einer Rastfeder (23) zur Bereitstellung der Federkraft beaufschlagt ist.

3. Vorrichtung nach Anspruch 1 oder 2, **dadurch gekennzeichnet, dass** die eine Stützhülse bildende Ankeraufnahme (9) unter Zwischenlage eines das Ankerende (7) dicht umschließbaren Dichtungsrings (11) der Vorrichtung am Boden eines den schalungsfesten Stützanschlag bildenden Einsatztopfs (4) abstützbar ist und im Bereich ihres Abstützendes eine Ringnut (14) bildet, in die ein flexibler Haltering (13) einer mit dem Einsatztopf (4) lösbar verbundenen Halterung (12) der Vorrichtung eingreift.

## Claims

1. Device for releasably supporting a formwork anchor (3) on a formwork element (1) of a concrete wall formwork having an anchor receptacle (9) - which can be axially supported on a formwork-proof supporting stop - for an anchor end (7) and having a latching body - which is axially supported in the anchor receptacle (9), can engage into latching recesses (22) of the anchor end (7) and can be released from the latching recesses (22) against a spring force - for the anchor end (7) which can be displaceably guided within the anchor receptacle (9), **characterised in that** the latching body forms a latching ring (19) which is pivotably supported on a peripheral side in the anchor receptacle (9), can surround the anchor end (7) and is provided with latching ribs (21) which, in a latching position of the latching ring (19) pivoted in the direction of the supporting stop towards the anchor end (7), engage into annular latching recesses (22) of the anchor end (7) and, in a release position of the latching ring (19) pivoted away from the anchor end (7), can open a passage for the anchor end (7).

2. Device as claimed in claim 1, **characterised in that** the latching ring (19) is influenced, on the peripheral side opposite its supporting side, with a latching spring (23) to provide the spring force.

3. Device as claimed in claim 1 or 2, **characterised in that** the anchor receptacle (9) forming a supporting sleeve can be supported on the base of an insert pot (4) forming the formwork-proof supporting stop, with interpositioning of a sealing ring (11) of the device which can tightly surround the anchor end (7), and forms in the region of its supporting end an annular groove (14), into which a flexible holding ring (13) of a holder (12) of the device, which is releasably connected to the insert pot (4), engages.

## Revendications

1. Dispositif pour appuyer de façon détachable un ancrage de coffrage (3) sur un élément de coffrage (1) d'un coffrage de mur en béton avec un logement d'ancrage (9) destiné à une extrémité d'ancrage (7) et pouvant prendre appui axialement sur une butée d'appui fixe par rapport au coffrage et avec un corps d'encliquetage prenant appui axialement dans le logement d'ancrage (9), pouvant s'engager dans des évidements d'encliquetage (22) de l'extrémité d'ancrage (7) et pouvant sortir des évidements d'encliquetage (22) en s'opposant à une force élastique pour l'extrémité d'ancrage (7) pouvant coulisser à l'intérieur du logement d'ancrage (9), **caractérisé en ce que** le corps d'encliquetage forme une bague d'encliquetage (19) s'appuyant de façon pivotante sur une face périphérique dans le logement d'ancrage (19) et pouvant entourer l'extrémité d'ancrage (7), qui est dotée de nervures d'encliquetage (21) qui, dans une position d'encliquetage de la bague d'encliquetage (19) basculée en direction de la butée d'appui vers l'extrémité d'ancrage (7), peuvent s'engager dans des évidements d'encliquetage annulaires (22) de l'extrémité d'ancrage (7) et, dans une position de relâchement de la bague d'encliquetage (19) détournée de l'extrémité d'ancrage (7), peuvent libérer un passage pour l'extrémité d'ancrage (7).

2. Dispositif selon la revendication 1, **caractérisé en ce que** la bague d'encliquetage (19) est pressée sur la face périphérique opposée à sa face d'appui par un ressort d'encliquetage (23) produisant la force élastique.

3. Dispositif selon la revendication 1 ou 2, **caractérisé en ce que** le logement d'ancrage (9) formant un manchon d'appui peut être appuyé avec interposition d'une bague d'étanchéité (11) du dispositif pouvant entourer de façon étanche l'extrémité d'ancrage (7) sur le fond d'un pot d'insertion (4) formant la butée d'appui fixe par rapport au coffrage et forme dans la région de son extrémité d'appui une rainure annulaire (14) dans laquelle une bague de support flexible (13) d'un support (12) relié de façon détachable avec le pot d'insertion (4) s'engage.
